# EUROPÄISCHE PATENTANMELDUNG

(11) **EP 0 792 710 A1**
(43) Veröffentlichungstag der Anmeldung: **03.09.1997**
(21) Anmeldenummer: 97250036.7
(22) Anmeldetag: 20.02.1997
(51) Int. Cl.: B23D 19/04, B23D 19/06, B23D 35/00

(54) **Besäumschere für Bleche und Bänder**

(30) Priorität: 28.02.1996 DE 19609256
(71) Anmelder: MANNESMANN Aktiengesellschaft, 40213 Düsseldorf (DE)
(72) Erfinder: Bittner, Gerhard, 47058 Duisburg (DE)
(74) Vertreter: Meissner, Peter E., Dipl.-Ing.

(57) **Zusammenfassung**

Die Erfindung betrifft eine Besäumschere für Bleche und Bänder mit zwei gegenüberliegenden auf Sockeln angeordneten Scherenrahmen, an denen jeweils über Stirnradgetriebe drehangetriebene und die Blech- bzw. Bandkanten beschneidende Rollmesserpaare fliegend gelagert sind, die sowohl in ihrer Schnittebene als auch parallel zur Schnittebene auf unterschiedliche Materialdicken und -breiten einstellbar sind. Hierbei sind an jedem um eine zentrale senkrechte Achse (2) drehbar gelagerten Scherenrahmen (1) zwei Rollmesserpaare (5, 6) derartig angeordnet, daß beim Drehen des Scherenrahmens (1) um 180° das erste Rollmesserpaar (5, 6) den Platz des zweiten Rollenpaares (5, 6) einnimmt, wobei der Eintrieb (9) der Stirnradgetriebe aller Rollmesserpaare (5. 6) eines Scherenrahmens (1) koaxial zur Drehachse (Achse 2) des Scherenrahmens (1) erfolgt.

## Beschreibung

Die Erfindung betrifft eine Besäumschere für Bleche und Bänder mit zwei gegenüberliegenden, auf Sockeln angeordneten Scherenrahmen, an denen jeweils über Stirnradgetriebe drehangetriebene und die Blech- bzw. Bandkanten beschneidende Rollmesserpaare fliegend gelagert sind, die sowohl in ihrer Schnittebene als auch parallel zur Schnittebene auf unterschiedliche Materialdicken und -breiten einstellbar sind.

Besäumscheren der gattungsbildenden Art sind beispielsweise aus der deutschen Patentschrift 41 08 717 C2 bekannt. Sie werden eingesetzt und sind dafür eingerichtet, unterschiedlich breite und unterschiedlich dicke Bleche oder Bände durch radiale und axiale Versetzung der zusammenwirkenden Rollmesser zu besäumen, d. h. die Bandkanten abzutrennen. Der Betrieb solcher Besäumscheren hat gezeigt, daß vor allem bei dünnen Bändern oder solchen aus relativ weichem Material aufgrund der Scherkraft Aufwölbungen, Kantenknicke und Fehler entstehen können, wenn keine entsprechenden Gegenmaßnahmen getroffen sind. Eine dieser Gegenmaßnahmen besteht darin, beide Messer anzutreiben. Der Antrieb der Messer erfolgt entweder über ein im Scherenrahmen angeordnetes oder ein dahinter gesetztes Kammwalzgetriebe, das mit den Messerwellen über Gelenkwellen verbunden ist.

Die bekannte Besäumschere weist zwei Scherenrahmen auf, die jeweils die Rollmesser fliegend gelagert tragen und die quer zur Bandrichtung und damit zur Einstellung der Bandbreite verstellbar sind. Darüber hinaus sind die Rollmesser jedes Rollmesserpaares aufeinander zu- und voneinander wegbewegbar, um das Messerpaar auf unterschiedliche Bandbreiten einstellen zu können.

Zum Auswechseln der Rollmesser bedarf es Montagezeiten, in denen die bekannte Anlage stillgesetzt sein muß.

Durch die DE 34 43 849 ist eine Randabgratvorrichtung für Blechbänder unterschiedlicher Breite bekannt geworden, mit der die Breiteneinstellung der Werkzeuge auch beim durchlaufenden Band ohne Stillsetzen der Anlage ermöglicht wird. Dazu sind die die Werkzeuge aufnehmenden Getrieberahmen auf quer zur Bandlaufrichtung verfahrbaren Wagen verschiebbar angeordnet; die Werkzeuge selbst sind um vertikale Achsen verschwenkbar, so daß ein bogenförmiger Schnitt im Übergang zu unterschiedlichen Bandbreiten möglich sit. Der Antrieb der Werkzeuge erfolgt über Einzelmotoren, die je nach Verschwenkstellung des Rahmens angesteuert werden.

Es ist Aufgabe der vorliegenden Erfindung, eine Besäumschere der gattungsgemäßen Art so zu verbessern, daß bei kurzen Montagezeiten ein einfaches Auswechseln der Rollmesser erfolgt und daß die Besäumschere zu diesem Zweck nur für einen äußerst kurzen Zeitraum stillgesetzt werden muß. Trotzdem soll bei der bekannten Schere der Antrieb beider Messer ermöglicht werden, ohne daß ein aufwendiges Auskuppeln oder Ausbauen von Antriebsteilen erforderlich ist.

Zur Lösung der Aufgabe wird erfindungsgemäß vorgeschlagen, daß an jedem um eine zentrale senkrechte Achse drehbar gelagerten Scherenrahmen zwei Rollmesserpaare derartig angeordnet sind, daß beim Drehen des Scherenrahmens um 180° das erste Rollmesserpaar den Platz des zweiten Rollmesserpaares einnimmt.

Die vorliegende Erfindung ermöglicht in äußerst kurzen Zeiträumen durch Verdrehen des gesamten Scherenrahmens das Rollmesserpaar außer Wirkung zu bringen und durch Verschwenken in eine Ausbaustellung auf der dem Band abgewandten Seite zu bringen. Gleichzeitig mit dem Verdrehen des Scherenrahmens wird das zweite Rollmesserpaar in Arbeitsstellung gebracht und kann in kürzester Zeit nach dem Drehen des Scherenrahmens seine Arbeit aufnehmen.

Um zu vermeiden, daß Antriebselemente beim Drehen des Scherenrahmens gelöst werden müssen, ist nach einem weiteren Merkmal der Erfindung vorgesehen, daß der Eintrieb der Stirnradgetriebe aller Rollmesserpaare eines Scherenrahmens koaxial zur Drehachse des Scherenrahmens erfolgt. Durch diese Lösung wird sichergestellt, daß weder Kupplungen noch Spindeln von den Antriebselementen demontiert werden müssen, weil der Scherenrahmen sich praktisch um die Antriebswelle dreht, die senkrecht in den Scherenrahmen geführt ist.

In einer Weiterbildung der Erfindung ist vorgesehen, daß zur Einstellung der Rollmesserpaare in ihren Schnittebenen mindestens eines der Rollmesser im Scherenrahmen verstellbar gelagert ist und die die verstellbaren Rollmesser antreibenden Stirnräder und/oder die sie tragenden Stirnradwellen in Verstellrichtung der Rollmesserpaare verschiebbar sind. Durch diesen Vorschlag der Erfindung wird ein Einstellen der Rollmesserpaare ermöglicht, ohne die Getriebeeingriffe der Stirnradverzahnungen zu lösen. Durch Verschieben der Stirnräder oder deren Wellen wird sichergestellt, daß auch beim Auseinander- und Zusammenführen der Rollmesser der getriebliche Eingriff erhalten bleibt, so daß auch beim Verstellen der Rollmesser keine Antriebselemente gelöst werden müssen.

Nach einem anderen Merkmal der Erfindung ist vorgesehen, daß zur Einstellung der Rollmesserpaare parallel zu ihren Schnittebenen die Rollmesser im Scherenrahmen in Richtung ihrer Drehachsen verschiebbar gelagert sind und die das Rollmesser unmittelbar antreibenden Zahnräder der Zahnradpaarungen auf der Antriebswelle der Rollmesser verschiebbar sind. Sind beispielsweise die Antriebswellen der Rollmesser über Kegelradpaare angetrieben, so ist vorzugsweise das auf der Antriebswelle aufsitzende Kegelrad verschiebbar, so daß ein Verschieben der Antriebswelle in ihre Längsachsrichtung möglich ist, ohne daß der Zahnradeingriff der Kegelradverzahnung gelöst werden muß.

In einer günstigen Ausgestaltung der Erfindung ist vorgesehen, daß jeder Scherenrahmen auf einem seine Drehachse koaxial umgreifenden Drehkranz abgestützt ist. Ein solcher Drehkranz kann, wie bekannt, als Kugeldrehverbindung ausgebildet sein, um das hohe Gewicht des Scherenrahmens sicher und vibrationsfrei aufzunehmen.

Zusätzlich ist erfindungsgemäß vorgesehen, daß die Rollmesserpaare jedes Scherenrahmens wechselweise vom Antrieb abkuppelbar sind, so daß das in der Ausbaustellung befindliche Rollmesserpaar vom Antrieb gelöst ist, während das im Betrieb befindliche Rollmesserpaar weiter mit dem Antrieb gekuppelt ist.

Ein Ausführungsbeispiel der Erfindung ist in der Zeichnung dargestellt und wird nachfolgend beschrieben. Es zeigt:
- Fig. 1: einen Querschnitt durch eine schematisch dargestellte Besäumschere der Erfindung und
- Fig. 2: einen um 90° gedrehten Schnitt durch die Besäumschere nach Figur 1.

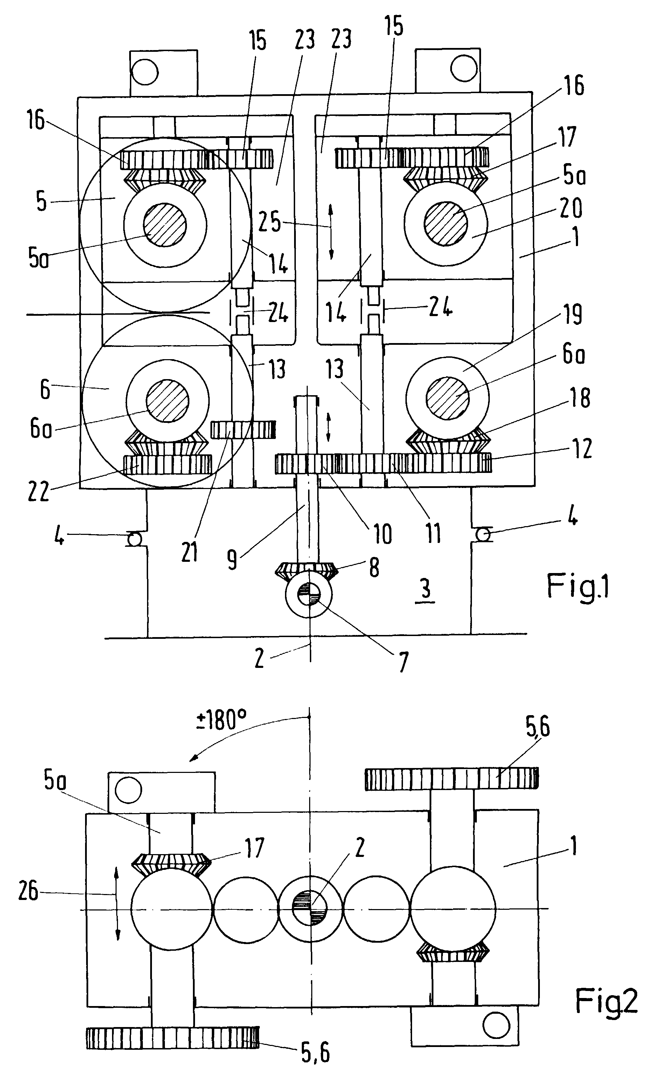

In Figur 1 ist mit 1 der Scherenrahmen bezeichnet, der um die zentrale senkrechte Achse 2 auf dem Sockel 3 drehbar gelagert ist. Die Lagerung erfolgt über den bei 4 angedeuteten Drehkranz, der die zentrale senkrechte Achse 2 koaxial umgreift.

Der Scherenrahmen 1 nimmt in sich das Stirnradgetriebe auf, mit dem die bei 5 und 6 angedeuteten Rollmesser der Besäumschere angetrieben werden. Der Antrieb erfolgt über eine quer zur Zeichnungsebene verlaufende Längswelle 7 über eine Kegelradverzahnung 8 und die Eintriebswelle 9, deren Längsachse mit der Achse 2 zusammenfällt. Über die Stirnräder 10, 11 und 12 wird das Antriebsmoment von der Eintriebswelle 9 auf die Antriebswelle 6a und über die Zwischenwellen 13 und 14 und das Stirnradpaar 15 und 16 auf die Antriebswelle 5a des in Figur 1 nicht erkennbaren zweiten Rollmesserpaares übertragen. Dazu sind zwischen den Stirnrädern 12 und 16 Kegelräder 17 und 18 angeordnet, die ihrerseits mit Kegelrädern 19 und 20 auf den Antriebswellen 5a und 6a kämmen. In gleicher Weise werden die Antriebswellen 5a und 5b des ersten Rollmesserpaares 5 und 6 angetrieben, wenn nach dem Drehen des Scherenrahmens 1 um die senkrechte Achse 2 durch Verschieben des Stirnrades 9 bzw. des Stirnrades 21, die Stirnräder 10, 21 und 22 miteinander gepaart werden.

In Figur 1 ist weiterhin erkennbar, daß die Rollmesser 5 beider Rollmesserpaare 5, 6 im Scherenrahmen 1 in Einbaustücken 23 gelagert sind, die über (nicht dargestellte) Verstellantriebe in ihrer Höhenlage im Scherenrahmen 1 verstellbar sind. Um die Zahnradpaarungen im Eingriff zu lassen, sind die Wellen 14 in Kupplungsstücken 24 verschiebbar, so daß die Zahnräder 15, 16 auch nach Verschieben des Einbaustückes 23 in Pfeilrichtung 25 im Eingriff bleiben.

In Figur 2 ist in der Draufsicht dargestellt, daß die Rollmesserpaare 5, 6 drehsymmetrisch zur zentralen senkrechten Achse 2 des Stirnrahmens 1 angeordnet sind und alle Antriebsteile praktisch spiegelbildlich vorhanden sind. Durch Drehen des Scherenrahmens 1 um die Achse 2 um 180° wird bewirkt, daß das in der Zeichnung untere Rollmesserpaar 5, 6 in die Position des in der Zeichnung oberen Rollmesserpaares 5, 6 verschwenkt wird und das obere Rollmesserpaar 5, 6 in die untere Position gelangt. Eines der Rollmesserpaare kann dann in dieser Stellung ausgebaut werden, wobei das Antriebsstirnrad 10 vom mit ihm gepaarten Stirnrad abgekuppelt ist.

Eine Verschiebung der Antriebswelle 5a in Pfeilrichtung 26 ermöglicht ein Einstellen der Rollmesser 5, 6 parallel zu ihrer Schnittebene, wobei sichergestellt wird, daß die Kegelradpaarung 17 im Eingriff bleibt. Dies kann beispielsweise dadurch erreicht werden, daß das auf der Antriebswelle 5a befindliche Kegelrad 10 auf der Antriebswelle verschiebbar ist.

## Patentansprüche

1. Besäumschere für Bleche und Bänder mit zwei gegenüberliegenden auf Sockeln angeordneten Scherenrahmen, an denen jeweils über Stirnradgetriebe drehangetriebene und die Blech- bzw. Bandkanten beschneidende Rollmesserpaare fliegend gelagert sind, die sowohl in ihrer Schnittebene als auch parallel zur Schnittebene auf unterschiedliche Materialdicken und -breiten einstellbar sind,
dadurch gekennzeichnet,
daß an jedem um eine zentrale senkrechte Achse (2) drehbar gelagerten Scherenrahmen (1) zwei Rollmesserpaare (5, 6) derartig angeordnet sind, daß beim Drehen des Scherenrahmens (1) um 180° das erste Rollmesserpaar (5, 6) den Platz des zweiten Rollenpaares (5, 6) einnimmt und daß der Eintrieb (9) der Stirnradgetriebe aller Rollmesserpaare (5. 6) eines Scherenrahmens (1) koaxial zur Drehachse (Achse 2) des Scherenrahmens (1) erfolgt.

2. Besäumschere nach Anspruch 1,
dadurch gekennzeichnet,
daß zur Einstellung der Rollmesserpaare (5, 6) in ihren Schnittebenen mindestens eines der Rollmesser (5, 6) im Scherenrahmen verstellbar (25) gelagert ist und die die verstellbaren Rollmesser (5, 6) antreibenden Stirnräder und/oder die sie tragenden Stirnradwellen in Verstellrichtung der Rollmesserpaare (5, 6) verschiebbar sind.

3. Besäumschere nach Anspruch 2,
dadurch gekennzeichnet,
daß zur Einstellung der Rollmesserpaare (5, 6) parallel zu ihren Schnittebenen die Rollmesser (5. 6) im Scherenrahmen (1) in Richtung ihrer Drehachsen verschiebbar gelagert sind und die das Rollmesser (5. 6) unmittelbar antreibenden Zahnräder (17) der Zahnradpaarungen auf der Antriebswelle (5a, 6a) der Rollmessers (5, 6) verschiebbar sind.

4. Besäumschere nach Anspruch 1 bis 3,
dadurch gekennzeichnet
daß jeder Scherenrahmen (1) auf einem seine Drehachse (Achse 2) koaxial umgreifenden Drehkranz (4) abgestützt ist.

5. Besäumschere nach Anspruch 1 bis 4,
dadurch gekennzeichnet
daß die Rollmesserpaare (5, 6) jedes Scherenrahmens (1) wechselweise vom Antrieb (9, 10) abkuppelbar sind.
